# EUROPEAN PATENT SPECIFICATION

(11) **EP 3 351 462 B1**
(45) Date of publication and mention of the grant of the patent: **19.02.2020**
(21) Application number: 18152492.7
(22) Date of filing: 19.01.2018
(51) Int. Cl.: B62J 1/12, B62J 1/20, B62J 1/18, B62J 1/26, B60N 2/70, B60N 2/60

(54) **VEHICLE SEAT STRUCTURE**
FAHRZEUGSITZSTRUKTUR
STRUCTURE DE SIÈGE DE VÉHICULE

(30) Priority: 23.01.2017 JP 2017009792
(43) Date of publication of application: 25.07.2018
(73) Proprietor: HONDA MOTOR CO., LTD., Tokyo 107-8556 (JP)
(72) Inventor: KOYANO, Mitsue, Saitama, 351-0193 (JP); KAWATANI, Shinji, Saitama, 351-0193 (JP); OTSUBO, Mamoru, Saitama, 351-0193 (JP); ENJO, Sadamichi, Saitama, 351-0193 (JP); OHARA, Takeshi, Saitama, 351-0193 (JP)
(74) Representative: Weickmann & Weickmann PartmbB

(56) References cited:
- EP-A1- 1 193 117
- EP-A2- 2 008 921
- JP-A- 2008 029 752
- US-A1- 2007 001 336
- US-A1- 2015 197 171

## Description

### [Technical Field]

The present invention relates to a vehicle seat structure.

### [Background Art]

A seat cover attachably/detachably mounted to/from a seat for a motorcycle has been known. A structure for this kind of seat cover has been known (for example, see JP-A No. 2008-29752). The known structure is provided with a three-dimensional knit fabric for covering a seat from above, a mounting surface material mounted to an edge portion of the three-dimensional knit fabric, a mounting portion provided to the mounting surface material and mounted to the seat, and an airtight sheet for covering one side of the three-dimensional knit fabric. Also, a urethane cushion is generally employed for a vehicle seat, and the cushion itself has no permeability.

US 2007/0001336 A1 discloses a vehicle seat structure according to the preamble of claim 1.

JP 2008 029 752 A shows a similar vehicle seat structure.

### [Summary of Invention]

### [Technical Problem]

However, in the existing structure, although the seat cover has the permeability and the water discharging efficiency, the permeability and the water discharging efficiency of the seat itself of the motorcycle are not improved. Also, thickness of the seat cover is limited. As a result, the permeability is restricted, and also radiation performance is restricted.

With that, an object of the present invention is to improve the permeability and the water discharging efficiency of the seat itself.

### [Solution to Problem]

In order to achieve the above-described object, according to the present invention, there is provided a vehicle seat structure according to claim 1.
The vehicle seat structure includes a cushion (12), and a cover (13) for covering the cushion (12). In the vehicle seat structure, the cushion (12) has a three-dimensional mesh structure made of resin, and the cover (13) has a mesh (100), the mesh (100) being attachably/detachably mounted to/from the cushion (12) and also being arranged in a region for covering the three-dimensional mesh structure.

In the above-described structure, the vehicle seat structure further includes a belt portion (200), the belt portion (200) having higher strength than the mesh (100) and configuring an outer peripheral edge of the cover (13) while endlessly surrounding the mesh (100).

Also, in the above-described structure, the mesh (100) is supported by a bottom plate portion (11) of the cushion (12) through the belt portion (200).

Also, in the above-described structure, the bottom plate portion (11) is formed separately from a portion of the three-dimensional mesh structure, and the belt portion (200) is supported by a lower surface of the bottom plate portion (11).

Also, in the above-described structure, the mesh (100) may be configured with a three-dimensional knitting having a multilayer structure.

Also, in the above-described structure, the mesh (100) may be provided on an upper surface of the cover (13), and the mesh (100) may not be provided on right and left side surfaces of the cover (13).

Also, in the above-described structure, the mesh (100) may extend to a front side and a back side of the cover (13), and the mesh (100) may be exposed downward of a seat.

### [Advantageous Effect of Invention]

In the present invention, the cushion has the three-dimensional mesh structure made of resin, and the cover for covering the cushion has the mesh, the mesh being attachably/detachably mounted to/from the cushion and also being arranged in the region for covering the three-dimensional mesh structure. With this configuration, the continuous permeability over the cover and the cushion can be ensured, and the permeability and the water discharging efficiency of the entire seat can be improved.

Also, the vehicle seat structure further includes the belt portion, the belt portion having higher strength than the mesh and configuring the outer peripheral edge of the cover while endlessly surrounding the mesh. For this reason, the strength of the cover itself can be effectively increased by the belt portion, and also ends can be suppressed from being rounded.

Also, the mesh is supported by the bottom plate portion of the cushion through the belt portion. For this reason, the supporting strength of the cover is easily ensured.

Also, the bottom plate portion is formed separately from the portion of the three-dimensional mesh structure, and the belt portion is supported by the lower surface of the bottom plate portion. For this reason, the seat bottom plate is highly strengthened, and also the supporting strength of the cover is easily obtained.

Also, the mesh is configured with the three-dimensional knitting having the multilayer structure. For this reason, the cushionability of the mesh can be improved.

Also, the mesh is provided on the upper surface of the cover, and the mesh is not provided on the right and left side surfaces of the cover. For this reason, the legs of the rider (occupant) can be suppressed from being wet with water intruding into from the mesh.

Also, the mesh extends to the front side and the back side of the cover, and the mesh is exposed downward of the seat. For this reason, the water discharging efficiency is improved.

### [Brief Description of Drawings]

[Fig. 1] Fig. 1 is a perspective view showing around a seat of a motorcycle including the seat according to an embodiment of the present invention.
[Fig. 2] Fig. 2 is a right side view of the seat.
[Fig. 3] Fig. 3 is a plan view of the seat.
[Fig. 4] Fig. 4 is a bottom view of the seat.
[Fig. 5] Fig. 5 is a cross-sectional view taken along line A-A in Fig. 2 and Fig. 4.
[Fig. 6] Fig. 6 is a cross-sectional view taken along line B-B in Fig. 2 and Fig. 4.
[Fig. 7] Fig. 7 is a cross-sectional view taken along line C-C in Fig. 4.
[Fig. 8] Fig. 8 is a cross-sectional view schematically showing a cushion structure and a cover mesh structure.

### [Description of Embodiments]

An embodiment of the present invention will be described below with reference to drawings.

Note that in the explanation, description such as the front and the rear, the right and the left, and the upper and the lower is the same as each direction of a vehicle body unless otherwise specially described. Also, in the respective drawings, a reference sign FR is indicative of a front side of the vehicle body, a reference sign UP is indicative of an upper side of the vehicle body, and a reference sign RH is indicative of a right side of the vehicle body.

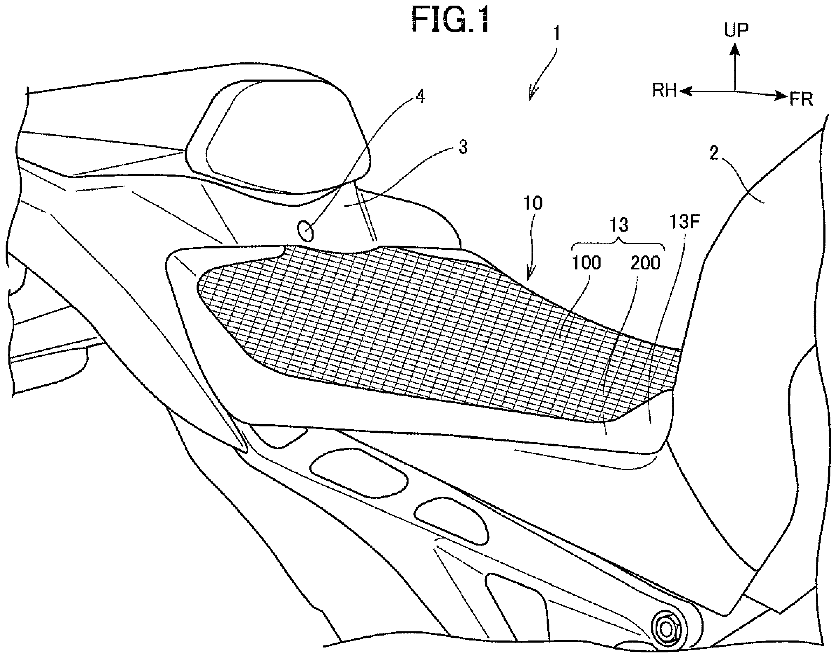

Fig. 1 is a perspective view showing around a seat of a motorcycle including the seat according to an embodiment of the present invention.

The seat 10 is an occupant seat. The occupant seat is configured to be arranged between a fuel tank 2 and a rear cowl 3 of a motorcycle 1, and the occupant seat is configured to allow a rider to be seated on. The seat 10 is attachably/detachably mounted to/from a vehicle body through a seat lock mechanism. Note that in Fig. 1, a reference sign 4 is a portion where a key cylinder is exposed from. The key cylinder is rotatively operated by inserting a vehicle key into the key cylinder in order to unlock the seat lock mechanism. The seat 10 will be detailedly described below.

The seat 10 is a single seat exclusive for a rider on the motorcycle 1. The seat 10 is formed into a shape having a width narrowed toward a front side and having a width widened toward a rear side. Since the seat 10 has the width narrowed toward the front side, the degree of freedom in movement of the legs of the rider seated on the seat 10 is ensured. Also, the seat 10 has the width widened toward the rear side, a wide seat area corresponding to, for example, a change in a posture of the rider, is ensured. Note that when the seat is not the single seat, the seat may have the shape having the width narrowed toward the front side and having the width widened toward the rear side.

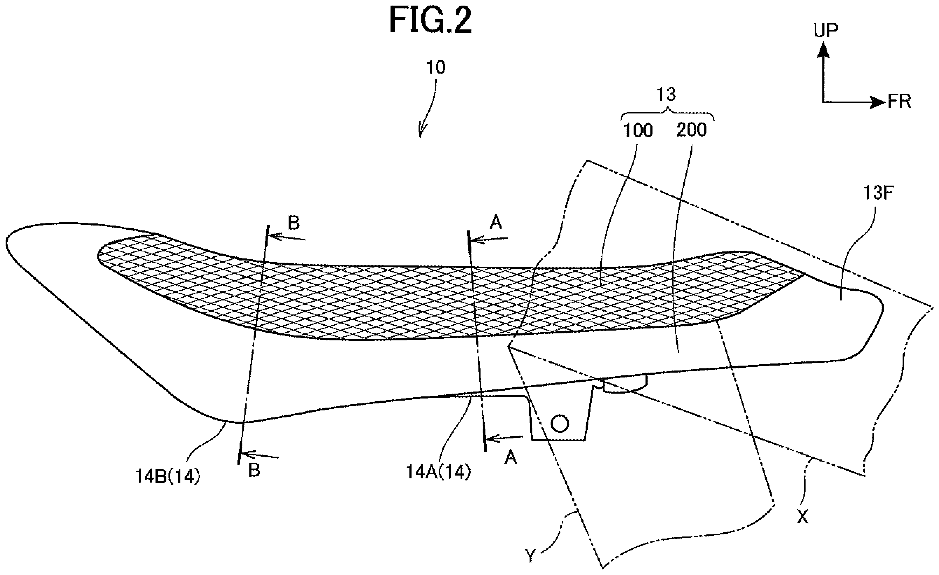

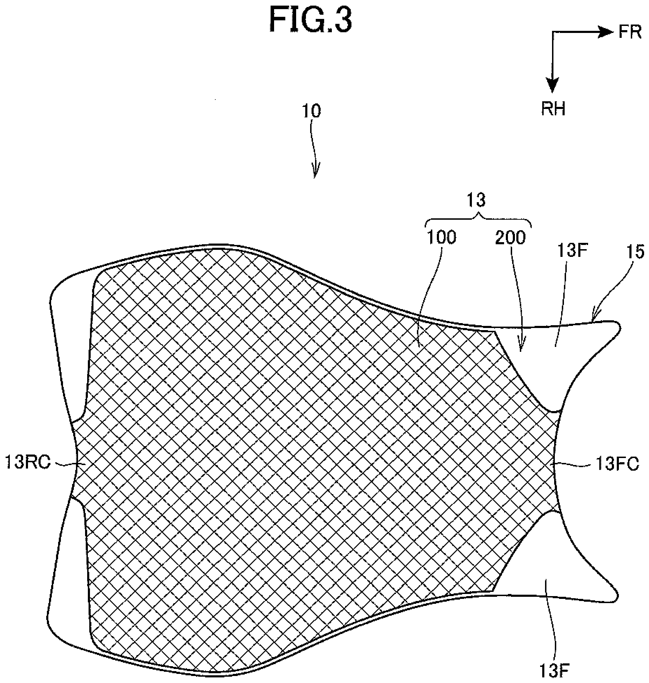

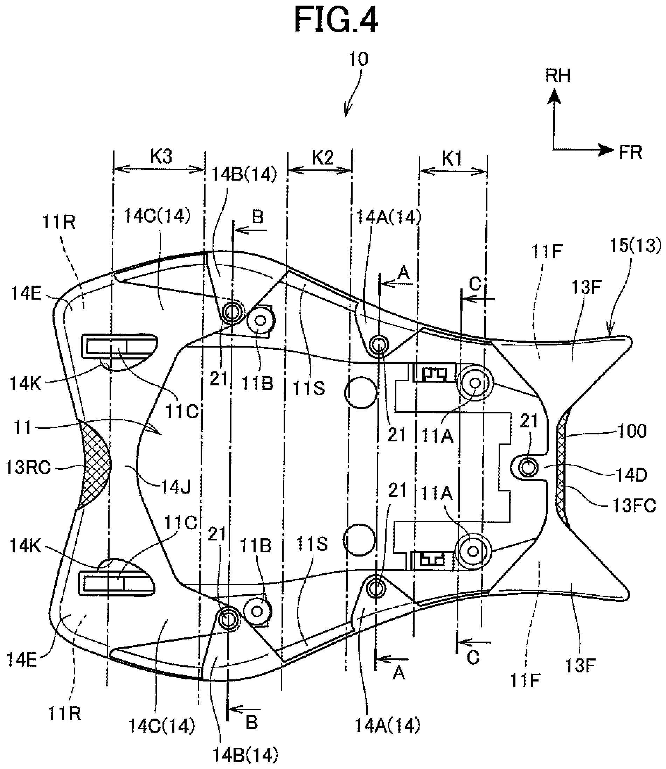

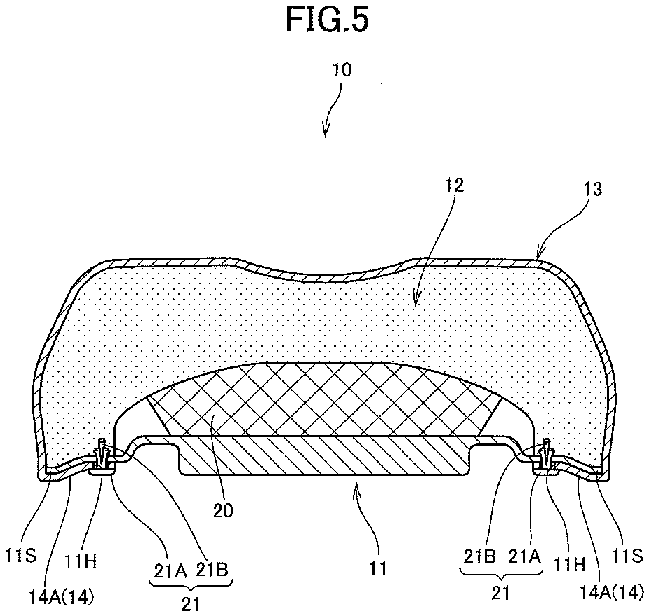

Fig. 2 is a right side view of the seat 10, Fig. 3 is a plan view of the seat 10, and Fig. 4 is a bottom view of the seat 10. Also, Fig. 5 is a cross-sectional view taken along line A-A in Fig. 2 and Fig. 4, Fig. 6 is a cross-sectional view taken along line B-B in Fig. 2 and Fig. 4, and Fig. 7 is a cross-sectional view taken along line C-C in Fig. 4.

The seat 10 is provided with a seat bottom plate 11 (Fig. 4) configuring a bottom plate of the seat 10, a cushion 12 (Fig. 5 to Fig. 7) arranged on the seat bottom plate 11, and a cover 13 (Fig. 2 to Fig. 7) functioning as a skin for covering the cushion 12 from above. In the present embodiment, a spacer 20 is interposed between the seat bottom plate 11 and the cushion 12. Note that according to specifications of the motorcycle 1, the spacer 20 may be omitted, and the shape of each of the spacer 20, seat bottom plate 11 and cushion 12 may be changed.

The seat bottom plate 11 is integrally formed of a material having rigidity such as hard synthetic resin, and the seat bottom plate 11 functions as a seat frame. The seat bottom plate 11 is formed into a shape having a width narrowed toward a front side and having a width widened toward a rear side. That is, the seat bottom plate 11 is formed into the same outer shape when the seat 10 is viewed in a plan view.

A front end of the seat bottom plate 11 is formed into a curved shape recessed rearward along a back surface (a rearwardly protruding curved surface) of the fuel tank 2. With this configuration, the seat bottom plate 11 is formed with a pair of right and left forwardly protruding portions 11F (Fig. 4) forwardly protruding from a right side and a left side of a front portion. Note that as shown in Fig. 4, the forwardly protruding portions 11F are covered with bag portions 13F of the cover 13. The bag portions 13F will be described later. Also, tip ends of the bag portions 13F may be cut out.

Also, a rear end of the seat bottom plate 11 is formed into a curved shape forwardly gently recessed along a front surface of the cover 13. With this configuration, the seat bottom plate 11 is formed with a pair of right and left rearwardly protruding portions 11R rearwardly swelling from the right and left of a rear portion. Note that as shown in Fig. 4, the rearwardly protruding portions 11R are covered with bag portions 14E of the cover 13. The bag portions 14E will be described later.

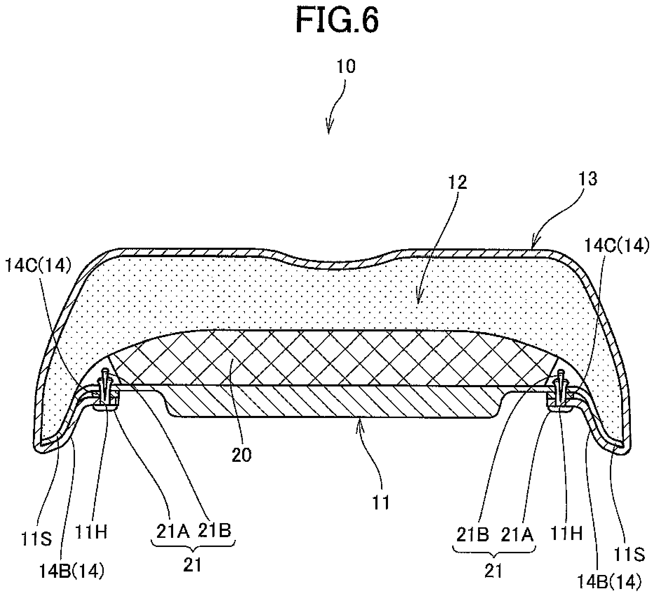

A pair of right and left side edge portions 11S (Fig. 4, Fig. 6) of the seat bottom plate 11 protrudes to a lower side than an inner area of the pair of right and left side edge portions 11S toward a rear side. With this configuration, an inner area of the seat bottom plate 11 is less likely viewed from the outside by the pair of right and left side edge portions 11S. In the inner area of the side edge portions 11S of the seat bottom plate 11, a plurality (five in the present embodiment) of holes 11H (Fig. 5) are formed in positions corresponding to the mounting members 21 for supporting the cover 13 with respect to the seat bottom plate 11.

Further, the seat bottom plate 11 is provided with a plurality of synthetic rubber leg portions 11A, 11B, a pair of right and left protruding portions 11C, and the like. The plurality of synthetic rubber leg portions 11A, 11B function as shock absorbing members provided between the seat 10 and the vehicle body. The pair of right and left protruding portions 11C protrudes rearward of the seat 10. The pair of right and left protruding portions 11C functions as regulation members. The regulation members are configured to be entered into a lower side of a component (for example, a frame component) on a side of the vehicle body, and the regulation members regulate lifting of the seat 10.

As shown in Fig. 5, clips are employed for the mounting members 21. The clips fix the seat bottom plate 11 and flange portions 14 of the cover 13 to each other by using the holes 11H formed in the seat bottom plate 11. The flange portions 14 will be described later. That is, the mounting members 21 are configured with cylindrical clip bodies 21A and lock members 21B. The cylindrical clip bodies 21A are inserted into the seat bottom plate 11. The lock members 21B are inserted into the clip bodies 21A. The mounting members 21 fix both the members to each other by enlarging tip ends of the clip bodies 21A by insertion of the lock members 21B.

With this configuration, a user fixes both the members (the seat bottom plate 11 and the cover 13) by pushing the lock members 21B toward an insertion direction by using a tool, and the user unfixes both the members by pushing the lock members 21B toward an inner side than the lock positions. For this reason, the cover 13 is easily mounted/detached to/from. Note that the structure of the clips is not limited to the above-mentioned structure. Known clips can be widely applied. Also, the mounting members 21 are not limited to the clips. Members for mounting the cover 13 to the seat bottom plate 11 can be widely applied to the mounting members 21.

The cushion 12 has a three-dimensional mesh structure made of resin such as synthetic resin. The cover 13 has a mesh 100 in an area for covering the three-dimensional mesh structure of the cushion 12. Also, a periphery of the mesh 100 of the cover 13 is endlessly surrounded with a belt portion 200 configuring an outer peripheral edge of the cover 13.

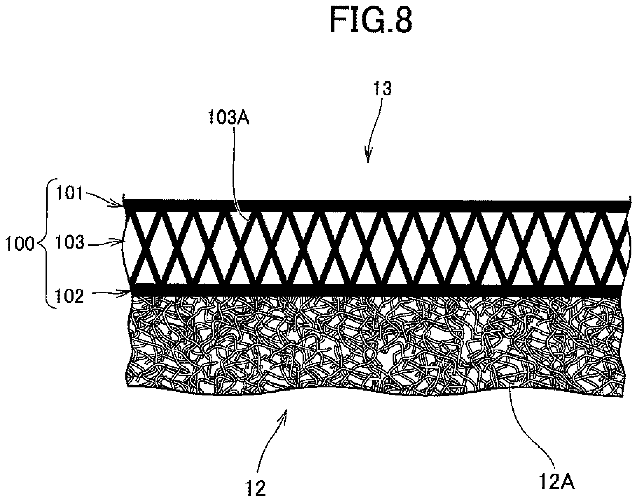

Fig. 8 is a cross-sectional view schematically showing a cushion structure and a mesh structure of the cover 13.

The cushion 12 is configured to have the three-dimensional mesh structure. The three-dimensional mesh structure is configured in such a manner that resin fibers (also called a continuous linear object) 12A made of thermoplastic elastomer are made to wind in order to form loops, and contact portions among the respective loops are joined together by fusion or the like.

That is, the cushion 12 is configured with a thermoplastic elastomer mesh body. With this configuration, the cushion having excellent cushionability, excellent durability, and excellent permeability is provided. Especially, in comparison with the existing urethane vehicle cushion, the cushion having superexcellent permeability is provided.

Also, a material, a fiber diameter, and a hollowness ratio (a hollowness area per unit area) of the fiber 12A are adjusted, so that the cushionability, permeability, durability (persistence of the cushionability), and the like can be adjusted to a desired performance. In this way, even the seat having comparatively small thickness obtains the permeability while obtaining the sufficient cushionability, and also the seat having comparatively small thickness obtains radiation performance and water discharging efficiency (water permeability). Since gaps are formed in the entire cushion 12, it is advantageous also to a reduction in weight of the seat 10.

Note that the cushion 12 is not limited to the thermoplastic elastomer mesh body. In short, the desired cushionability, desired permeability, and the like can be obtained by applying the three-dimensional mesh structure to the cushion 12.

As shown in Fig. 8, the mesh 100 of the cover 13 is provided with a surface layer 101, a rear layer 102, and a coupling layer 103 for coupling the surface layer 101 and the rear layer 102 with each other. The respective layers 101 to 103 are configured with three-dimensional knitting having a trilaminar structure composed of knitting fabric. The knitting fabric is formed by knitting a fiber material made of synthetic resin or the like. The surface layer 101 and the rear layer 102 are formed with the knitting fabric having mesh-shaped perforated texture, and the surface layer 101 and the rear layer 102 have permeability. Note that as the surface layer 101, it is preferable to use the fiber material (for example, bulky yarns) improving feel of a surface and having low water retainability.

The coupling layer 103 is configured by coupling the surface layer 101 and the rear layer 102 with each other by monofilament coupling yarns 103A. More specifically, the coupling layer 103 is formed with the knitting fabric having a cross structure. The cross structure is such that at least two coupling yarns 103A intersect with each other when the surface layer 101 and the rear layer 102 are coupled with each other. By employing the cross structure, the permeability, shape stability, flexibility (shock absorption), and the like of the cover 13 as the three dimensional knitting can be easily achieved at the same time. In addition, the gaps are formed with respect to the entire cover 13, it is advantageous also to the reduction in weight of the cover 13.

In this way, since the cushion 12 and the cover 13 have the permeability, the permeability, radiation performance, and water discharging efficiency of the seat 10 itself are obtained. In addition, since the cushion 12 and the cover 13 are formed of resin, in comparison with use of natural fibers, the seat 10 can have a waterproof structure.

Note that the coupling layer 103 is not limited to the cross structure. The coupling layer 103 may have a columnar structure or a truss structure. The columnar structure is such that the surface layer 101 and the rear layer 102 are coupled with each other in an approximately vertical manner. The truss structure is such that at least two coupling yarns 103A and front and rear knitting fabrics form a triangle.

Also, the mesh 100 may have a multilayer structure other than the three layers. Also, some of or all the respective layers 101 to 103 may be configured with a material other than the knitting fabric, for example, the surface layer 101 or the rear layer 102 may be changed to one mesh fabric. Also, the multilayer structure is not limited. A known mesh material may be used.

As shown in Fig. 3 and Fig. 4, the cover 13 is integrally provided with a pair of right and left bag portions 13F and a plurality of flange portions 14. The pair of right and left bag portions 13F is caught on a pair of right and left forwardly protruding portions 11F. The pair of right and left forwardly protruding portions 11F is positioned on a right side and a left side of the front portion of the seat bottom plate 11. The plurality of flange portions 14 are bent toward a lower surface of the seat bottom plate 11 over a side edge of the seat bottom plate 11.

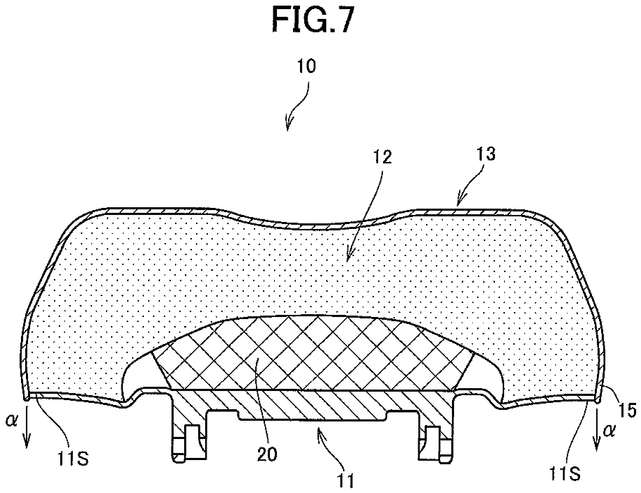

Hereat, as shown in Fig. 7, a portion (corresponding to a cover body portion 15) excluding the flange portions 14 of the cover 13 is formed only to the positions of the side edge portions 11S of the seat bottom plate 11. That is, the lower surface of the seat bottom plate 11 is not covered with the above-described portion.

That is, the cover 13 is provided with the cover body portion 15 and the plurality of flange portions 14. The cover body portion 15 covers the side edge without being bent inward in a vehicle width direction from the side edge of the seat bottom plate 11. The plurality of flange portions 14 extend from the cover body portion 15, and the plurality of flange portions 14 are mounted to the seat bottom plate 11. With this configuration, as shown by arrows α in Fig. 7, water such as rainwater and sweat intruding into the seat 10 can be discharged from between the cover body portion 15 and the side edge portions 11S of the seat bottom plate 11 to the outside by using gravity. For this reason, such a structure can be achieved that the water is not collected inside of the seat 10.

Hereat, the cover body portion 15 corresponds to a region of the seat 10 exposed to the outside, and the cover body portion 15 includes the mesh 100 and the belt portion 200 (excluding the flange portions 14). For this reason, the cover body portion 15 includes also the pair of right and left bag portions 13F, 14E; however, since the bag portions 13F, 14E are caught on the pair of right and left protruding portions 11F, 11R, the cover body portion 15 covers up to the lower surfaces of the protruding portions 11F, 11R.

If the water inside of the seat 10 intrudes into the bag portions 13F, the water is discharged from an opening formed in each of the bag portions 13F. Since the opening formed in each of the bag portions 13F is opened downward of the seat bottom plate 11, the water is discharged from below the seat 10, and the water does not adhere to the occupant.

As shown in Fig. 2, Fig. 3, and the like, the belt portion 200 configuring the outer peripheral edge of the cover 13 endlessly extends over a periphery of the cover body portion 15. The belt portion 200 includes the pair of right and left bag portions 13F and the flange portions 14.

The belt portion 200 is formed of a seat material having higher strength than the mesh 100. For example, the belt portion 200 is formed of the seat material made of synthetic resin such as PVC leather. For this reason, the strength of the cover 13 having the mesh 100 can be reinforced by the belt portion 200.

Also, the mesh 100 is provided to only an upper surface of the cover 13, that is, there are parts with no mesh 100 provided on a right side surface and a left side surface of the cover 13. More specifically, the mesh 100 is provided to only a region with the rider seated on. With this configuration, the strength of the cover 13 can be increased by the belt portion 200 while ensuring by the mesh 100 the permeability and radiation performance of the region with the rider brought into contact with. Also, since the water intruding into from the mesh 100 is not discharged from the right side surface and left side surface of the cover 13, the legs of the rider (occupant) can be inhibited from being wetted with the water.

Note that as shown in Fig. 3, the mesh 100 extends to a center portion 13FC of a front surface of the cover 13 and a center portion 13RC of a back surface of the cover 13. With this configuration, the permeability, heat exhaust properties, and water discharging efficiency in a longitudinal direction of the seat 10 are ensured. In addition, as shown in Fig. 4, the mesh 100 provided to each of the center portion 13FC of the front surface and the center portion 13RC of the back surface is exposed downward of the seat. With this configuration, the water discharging efficiency is further improved. Since the center portion 13FC of the front surface of the cover 13 and the center portion 13RC of the back surface of the cover 13 are arranged in positions separated from the legs of the rider, even if the water is discharged, the water is suppressed from adhering to the legs of the rider.

The flange portions 14 are provided with a pair of right and left flange portions (front sides are called as side first flange portions 14A, and rear sides are called as side second flange portions 14B). The pair of right and left flange portions extends at intervals in the longitudinal direction from the right and left side edges of the cover body portion 15. Further, the flange portions 14 are provided with a pair of right and left rear flange portions 14C and a front flange portion 14D. The pair of right and left rear flange portions 14C extends from the rear edge of the cover body portion 15. The front flange portion 14D extends from the front edge of the cover body portion 15.

As shown in Fig. 4, the side first flange portions 14A and the side second flange portions 14B are formed into a triangular having a width narrowed toward the tip end. Each of the tip ends is mounted to the seat bottom plate 11 by the mounting member 21.

The pair of right and left rear flange portions 14C is also formed into the triangular having the width narrowed toward the tip end. Each of the tip ends is mounted to the seat bottom plate 11 by the mounting member 21. Also, the rear flange portions 14C are provided with the bag portions 14E. The bag portions 14E cover corners (the region of the rearwardly protruding portions 11R). The corners are portions with the side edges and the rear edges of the seat bottom plate 11 connected to each other. The bag portions 14E are caught on the rear edges of the seat bottom plate 11. The tip ends of the bag portions 14E may be cut out. Note that the pair of right and left rear flange portions 14C is provided integrally with a crosslinking member 14J. The crosslinking member 14J is provided to connect the pair of right and left rear flange portions 14C to each other. The pair of right and left rear flange portions 14C is also provided with each opening 14K. Each opening 14K is provided for passage of the pair of right and left protruding portions 11C provided to the rear portion of the seat bottom plate 11.

As shown in Fig. 4, when the rear flange portion 14C on the right side and the side second flange portion 14B on the right side are bent downward of the seat bottom plate 11, the tip ends of the rear flange portion 14C on the right side and the side second flange portion 14B on the right side overlap with each other, and the rear flange portion 14C on the right side and the side second flange portion 14B on the right side are mounted to the seat bottom plate 11 by the same mounting member 21. With this configuration, the rear flange portion 14C on the right side and the side second flange portion 14B on the right side are fixed by being fastened together, and it becomes possible to achieve simplification of mounting/demounting of the cover 13 and a reduction in the number of components.

Further, as shown in Fig. 4, intervals K1, K2, K3 wider than the width of each of the flange portions 14A to 14C are formed among the pair of right and left bag portions 13F, the pair of right and left side first flange portions 14A, the pair of right and left side second flange portions 14B, and the pair of right and left rear flange portions 14C.

These intervals K1 to K3 are served as spaces configured in such a manner that the water intruding into the seat 10 can be efficiently discharged from between the cover body portion 15 and the seat bottom plate 11. For this reason, the water discharging efficiency can be improved by ensuring the wider gaps than the width of the flanges.

The front flange portion 14D is formed into a rectangle extending while keeping the same width. The front flange portion 14D is mounted to the center of the front portion of the seat bottom plate 11 by the mounting member 21.

Hereat, in Fig. 2, two-dot chain lines show the legs of the rider seated on the seat 10. The two-dot chain line designated by a reference sign X shows the leg of the rider during traveling. More specifically, the two-dot chain line X shows a position when the foot is placed on a step of the motorcycle 1.

Also, the two-dot chain line designated by a reference sign Y shows the leg during stopping. More specifically, the two-dot chain line Y shows a position when the foot is grounded. Also, in Fig. 2, line "A-A" is a cross section line crossing the side first flange portions 14A, and line "B-B" is a cross section line crossing the side second flange portions 14B.

As shown in Fig. 2, in the present structure, the side first flange portions 14A and the side second flange portions 14B are provided behind the leg X during traveling and the leg Y during stopping in a side view.

That is, the side first flange portions 14A and the side second flange portions 14B are arranged while avoiding the positions corresponding to the legs of the rider. With this configuration, the water slipping down from the surface and the inner surface of the cover 13 and adhering to the respective flange portions 14A, 14B can be suppressed from adhering to the legs of the rider.

As has been described above, in the present embodiment, the cushion 12 has the three-dimensional mesh structure made of resin. The cover 13 for covering the cushion 12 has the mesh 100. The mesh 100 is attachably/detachably mounted to/from the cushion 12, and also the mesh 100 is provided in the region for covering the three-dimensional mesh structure. With this configuration, the continuous permeability over the cover 13 and the cushion 12 can be ensured, and the permeability, radiation performance, and water discharging efficiency of the entire seat 10 can be improved. Also, the waterproof material such as resin can be used for the cushion 12 and the cover 13. Also, the cover 13 can be washed after being demounted from the cushion 12.

Also, the belt portion 200 is provided. The belt portion 200 has higher strength than the mesh 100, and the belt portion 200 configures the outer peripheral edge of the cover 13 while endlessly surrounding the mesh 100. For this reason, the strength of the cover 13 itself can be effectively increased by the belt portion 200, and also ends are suppressed from being rounded.

Also, since the mesh 100 is supported by the seat bottom plate 11 configuring the bottom plate portion of the cushion 12 through the belt portion 200, the supporting strength of the cover 13 is easily ensured.

Further, the seat bottom plate 11 is formed separately from the portion of the cushion 12 having the three-dimensional mesh structure, and the belt portion 200 is supported by the lower surface of the seat bottom plate 11. For this reason, the seat bottom plate 11 can be highly strengthened, and also the supporting strength of the cover 13 can be easily obtained.

Further, the mesh 100 is configured with the three-dimensional knitting having the multilayer structure. For this reason, the cushionability of the mesh 100 can be improved.

Also, the mesh 100 is provided on the upper surface of the cover 13, and there are portions with no mesh 100 provided on the right and left side surfaces of the cover 13. For this reason, the legs of the rider (occupant) can be suppressed from being wet with the water intruding into from the mesh 100. Also, the mesh 100 extends to both the front side and the back surface of the cover 13, and the mesh 100 is exposed downward of the seat. For this reason, the water discharging efficiency is improved.

Further, in the present embodiment, the cover 13 has the cover body portion 15 and the plurality of flange portions 14. The cover body portion 15 covers up to the side edge of the seat bottom plate 11 without exceeding the side edge. The plurality of flange portions 14 extend from the cover body portion 15, and the plurality of flange portions 14 are mounted to the seat bottom plate 11. The plurality of flange portions 14 are arranged while avoiding the positions of the cover body portion 15 corresponding to the legs of the rider on the vehicle. With this configuration, the water slipping down from the cover 13 and led to flow to the respective flange portions 14 can be suppressed from adhering to the legs of the rider (occupant).

Also, the bag portions 13F are provided. The bag portions 13F extend from the cover body portion 15, and the bag portions 13F are caught on the forwardly protruding portions 11F configuring the front end of the seat bottom plate 11. The plurality of flange portions 14A to 14C extend from the side edge and rear edge of the cover body portion 15. For this reason, the cover 13 can be mounted by such a simple operation that after the bag portions 13F of the cover 13 are caught on the seat bottom plate 11 and the cover 13 is temporarily fixed, the flange portions 14A to 14C extending from the side edge and rear edge of the cover body portion 15 are mounted to the seat bottom plate 11. As a result, the cover 13 is easily mounted/demounted to/from. Also, the flange portions extending from the side edge and front edge of the cover body portion 15 may be provided, and the cover may be easily mounted/demounted to/from.

In addition, in the present embodiment, the front flange portion 14D extending from the front edge of the cover body portion 15 is mounted to the seat bottom plate 11. For this reason, the mounting strength with respect to the cover 13 on a side of the front portion of the seat 10 and the seat bottom plate 11 can be improved. Note that if the mounting strength with respect to the front portion of the seat 10 can be ensured by the bag portions 13F of the cover 13, the front flange portion 14D may be omitted.

Also, the plurality of flange portions 14A to 14C are mounted to the cover body portion 15 at intervals K1 to K3 wider than the width of the flange portions 14A to 14C. For this reason, the water discharging efficiency from between the respective flange portions 14A to 14C can be improved.

Also, the different flange portions 14B, 14C extend toward the same mounting position (hole portions 11H) of the seat bottom plate 11, and the different flange portions 14B, 14C are mounted to the seat bottom plate 11 by the common mounting members 21. For this reason, it becomes possible to facilitate mounting/demounting of the cover 13 and to reduce the number of components.

Also, the mounting members 21 are the clips configured to fix the seat bottom plate 11 and the flange portions 14B, 14C to each other by using the hole portions 11H formed in the seat bottom plate 11. For this reason, the cover 13 can be easily mounted/demounted to/from by using widely used clips.

Further, the cover 13 has the mesh 100 allowing the inside and outside of the cover 13 to communicate with each other. For this reason, the water intruding into the seat 10 through the mesh 100 can be suppressed from adhering to the legs of the rider (occupant) when the water slips down from the plurality of flange portions 14.

The above-described embodiment is absolutely one embodiment of the present invention. Various design modifications and application may be optionally made within the scope not departing from the gist of the present invention.

For example, the shape of the seat 10 may be appropriately changed. Also, in the above-described embodiment, the present invention is applied to the single seat exclusive for the rider; however, the present invention may be applied to a tandem seat for allowing the rider and a pillion passenger to be seated on or a single seat exclusive for the pillion passenger.

Also, in the above-described embodiment, the case that the cushion 12 and the seat bottom plate 11 are separately formed is explained; however, the cushion 12 and the seat bottom plate 11 may be integrally formed. For example, when the cushion 12 is manufactured, the seat bottom plate 11 may be integrally formed by forming the lower portion of the cushion 12 into a plate shape.

HK31044 for Application Also, the present invention can be applied to the vehicle seat structure other than the motorcycle. For example, the present invention can be applied to a vehicle seat structure with a seat of a saddle riding vehicle or the like exposed to the outside of the vehicle. The saddle riding vehicles include general vehicles with the rider riding the vehicle body in a striding manner. The saddle riding vehicles are not limited to the motorcycles (also including motorized bicycles) but also including other two-wheeled vehicles such as bicycles and three-wheeled vehicles and four-wheeled vehicles such as ATVs (All Terrain Vehicles).

### [Reference Signs List]

- 1: Motorcycle (saddle riding vehicle)
- 10: Seat
- 11: Seat bottom plate
- 12: Cushion
- 13: Cover
- 13F: Bag portion
- 14: Flange portion
- 14A: Side first flange portion
- 14B: Side second flange portion
- 14C: Rear flange portion
- 14D: Front flange portion
- 15: Cover body portion
- 21: Mounting member
- 21A: Clip body
- 21B: Lock member
- 100: Mesh
- 200: Belt portion

## Claims

1. A vehicle seat structure comprising
a cushion (12),
a cover (13) for covering the cushion (12), and
a belt portion (200),
wherein the cushion (12) has a three-dimensional mesh structure made of resin, **characterized in that**
the cover (13) has a mesh (100), the mesh (100) being attachably/detachably mounted to/from the cushion (12) and also being arranged in a region for covering the three-dimensional mesh structure,
wherein the belt portion (200) has higher strength than the mesh (100) and configures an outer peripheral edge of the cover (13) while endlessly surrounding the mesh (100),
the mesh (100) is supported by a bottom plate portion (11) of the cushion (12) through the belt portion (200),
the bottom plate portion (11) is formed separately from a portion of the three-dimensional mesh structure, and
the belt portion (200) is supported by a lower surface of the bottom plate portion (11).

2. The vehicle seat structure according to claim 1, wherein the mesh (100) is configured with a three-dimensional knitting having a multilayer structure.

3. The vehicle seat structure according to claims 1 or 2, wherein the mesh (100) is provided on an upper surface of the cover (13), and the mesh (100) has parts without arrangement on right and left side surfaces of the cover (13).

4. The vehicle seat structure according to any one of claims 1 to 3, wherein the mesh (100) extends to a front side and a back side of the cover (13), and the mesh (100) is exposed downward of a seat.

## Patentansprüche

1. Fahrzeugsitzstruktur, welche aufweist:
ein Polster (12),
eine Abdeckung (13) zum Abdecken des Polsters (12), und
einen Gürtelabschnitt (200),
wobei das Polster (12) eine aus Kunststoff hergestellte dreidimensionale Gitterstruktur aufweist, **dadurch gekennzeichnet, dass**
die Abdeckung (13) ein Gitter (100) aufweist, wobei das Gitter (100) an dem Polster (12) anbringbar und von diesem abnehmbar angebracht ist und auch in einem Bereich angeordnet ist, um die dreidimensionale Gitterstruktur zu bedecken,
wobei der Gürtelabschnitt (200) eine höhere Festigkeit hat als das Gitter (100) und einen Außenumfangsrand der Abdeckung (13) konfiguriert, während er das Gitter (100) endlos umgibt,
das Gitter (100) von einem Bodenplattenabschnitt (11) des Polsters (12) durch den Gürtelabschnitt (200) getragen ist,
der Bodenplattenabschnitt (11) separat von einem Abschnitt der dreidimensionalen Gitterstruktur ausgebildet ist, und
der Gürtelabschnitt (200) von einer Unterseite des Bodenplattenabschnitts (11) getragen ist.

2. Die Fahrzeugsitzstruktur nach Anspruch 1, wobei das Gitter (100) mit einem eine mehrschichtige Struktur aufweisenden dreidimensionalen Gestrick konfiguriert ist.

3. Die Fahrzeugsitzstruktur nach den Ansprüchen 1 oder 2, wobei das Gitter (100) auf einer Oberseite der Abdeckung (13) vorgesehen ist, und das Gitter (100) Teile ohne Anordnung an rechten und linken Seitenflächen der Abdeckung (13) aufweist.

4. Die Fahrzeugsitzstruktur nach einem der Ansprüche 1 bis 3, wobei sich das Gitter (100) von einer Vorderseite und einer Rückseite der Abdeckung (13) erstreckt und das Gitter (100) vom Sitz nach unten freiliegt.

## Revendications

1. Structure de siège de véhicule comprenant :
un coussin (12),
une couverture (13) pour recouvrir le coussin (12), et
une partie de ceinture (200),
dans laquelle le coussin (12) a une structure en maille tridimensionnelle réalisée à partir de résine, **caractérisée en ce que** :
la couverture (13) a une maille (100), la maille (100) étant montée de manière pouvant être fixée / détachée sur / du coussin (12) et étant également agencée dans une région pour recouvrir la structure en maille tridimensionnelle,
dans laquelle la partie de ceinture (200) a une plus grande résistance que la maille (100) et configure un bord périphérique externe de la couverture (13) tout en entourant, sans fin, la maille (100),
la maille (100) est supportée par une partie de plaque inférieure (11) du coussin (12) par le biais de la partie de ceinture (200),
la partie de plaque inférieure (11) est formée séparément d'une partie de la structure en maille tridimensionnelle, et
la partie de ceinture (200) est supportée par une surface inférieure de la partie de plaque inférieure (11).

2. Structure de siège de véhicule selon la revendication 1, dans laquelle la maille (100) est configurée avec un tricotage tridimensionnel ayant une structure à plusieurs couches.

3. Structure de siège de véhicule selon les revendications 1 ou 2, dans laquelle la maille (100) est prévue sur une surface supérieure de la couverture (13), la maille (100) a des parties sans agencement sur les surfaces latérales droite et gauche de la couverture (13).

4. Structure de siège de véhicule selon l'une quelconque des revendications 1 à 3, dans laquelle la maille (100) s'étend à partir d'un côté avant et d'un côté arrière de la couverture (13), et la maille (100) est exposée vers le bas d'un siège.
